# EUROPÄISCHE PATENTANMELDUNG

(11) **EP 3 620 846 A1**
(43) Veröffentlichungstag der Anmeldung: **11.03.2020**
(21) Anmeldenummer: 19194944.5
(22) Anmeldetag: 02.09.2019
(51) Int. Cl.: G02C 13/00, G06Q 30/06, G06T 19/20

(54) **VERFAHREN UND SYSTEM ZUR VIRTUELLEN ANATOMISCHEN ANPASSUNG EINER BRILLE**

(30) Priorität: 06.09.2018 DE 102018121742
(71) Anmelder: Fielmann Ventures GmbH, 22083 Hamburg (DE)
(72) Erfinder: RÜTZEL, Thomas, 22455 Hamburg (DE); SCHWINGER, Tobias, 22605 Hamburg (DE)
(74) Vertreter: Seemann & Partner Patentanwälte mbB

(57) **Zusammenfassung**

Verfahren und System (50) zur virtuellen anatomischen Anpassung einer Brille an den Kopf (2) eines Menschen, mit den Verfahrensschritten
a) Auswählen einer Initial-Positionierung eines dreidimensionalen Brillenmodells (10) der Brille an einem dreidimensionalen Kopfmodell (30) anhand bekannter Referenzpunkte des Kopfmodells (30),
b) Verfeinern der Positionierung des Brillenmodells (10) am Kopfmodell (30), ausgehend von der Initial-Positionierung, wobei das Verfeinern der Positionierung zusammen mit einem Biegen der Fassung des Brillenmodells (10) zur Anpassung an anatomische Vorgaben des Kopfmodells (30) ausgeführt wird,
c) Anpassen des Brillenmodells (10) an das Kopfmodell (30) durch Biegen der Bügel (14),
wobei die in den Schritten b) und c) durchgeführten Verfeinerungen und Anpassungen einmalig ausgeführt oder zur weiteren Verfeinerung wiederholt werden.

## Beschreibung

Die Erfindung betrifft ein Verfahren und System zur virtuellen anatomischen Anpassung einer Brille an den Kopf eines Menschen.

Die Anpassung von Brillen ist eine essenzielle Aufgabe von Optikern und ausgebildetem Personal in Optik-Fachgeschäften. Zwei wesentliche Komponenten bei der Anpassung von Brillen sind die anatomische Anpassung des Gestells, welches die auch "Front" genannte Fassung der Brillengläser sowie die Bügel umfasst, sowie die Zentrierung der Brillengläser. Letztere setzt die vorherige anatomische Anpassung des Gestells voraus. Eine solche Anpassung ist nicht erst bei der Übergabe einer zuvor käuflich erworbenen Brille notwendig, sondern auch vorteilhaft bei der Auswahl eines geeigneten Gestells.

Brillen werden zunehmend auch mit der Unterstützung von Computervisualisierungen ausgesucht und verkauft, sowohl in Optik-Fachgeschäften als auch im Internet. Dazu wird ein dreidimensionales Modell einer Brille einem Bild oder einem dreidimensionalen Modell des Kopfes eines Kunden überlagert, um eine Einschätzung zu erlauben, ob diese Brille für den Kunden infrage kommt.

Es existieren entsprechende virtuelle Anprobelösungen, mit denen 3D-Modelle von Brillengestellen auf einem 3D-Modell eines Kopfes eines Kunden visualisiert werden können. Die bekannten Verfahren berücksichtigen jedoch keine anatomische Anpassung der Brillengestelle an die tatsächliche Kopfform. Anatomische Anpassungen müssen später durchgeführt werden, wodurch sich die Annahmen für die Zentrierung der Brillengläser wieder ändern. Die persönliche Anpassung, wie sie derzeit von einem Optiker durchgeführt wird, wird nicht simuliert. Mit einigen Typen von Brillengestellen ist es auf diese Weise nicht möglich, eine zufriedenstellende Anpassung überhaupt zu erreichen. Andere Fassungen können einem gegebenen Kunden nicht passen, auch nicht nach Anpassung, weil sie zu klein oder zu groß sind. Dies gilt beispielsweise für Azetatfassungen, die im Bereich der Nase nur sehr begrenzt anpassbar sind. Die Brille ist dann für den Kunden in diesem Fall untauglich. Ferner ist es wahrscheinlich, dass dann, wenn die Brille nicht individuell angepasst wird, Zentrierung und Sitz der bestellten Brille im Allgemeinen nicht optimal sind. Im Extremfall ist eine solche Brille dann nicht zu gebrauchen.

Hiervon ausgehend liegt der vorliegenden Erfindung die Aufgabe zugrunde, die virtuelle Anpassung von Brillen zu verbessern.

Diese Aufgabe wird durch ein Verfahren zur virtuellen anatomischen Anpassung einer Brille an den Kopf eines Menschen auf der Basis eines dreidimensionalen Kopfmodells des Kopfes eines Kunden sowie eines dreidimensionalen Brillenmodels einer anzupassenden Brille gelöst, welches die folgenden Verfahrensschritte aufweist:
a) Auswählen einer Initial-Positionierung des dreidimensionalen Brillenmodells der Brille am Kopfmodell anhand bekannter Referenzpunkte des Kopfmodells,
b) Verfeinern der Positionierung des Brillenmodells am Kopfmodell, ausgehend von der Initial-Positionierung, wobei das Verfeinern der Positionierung zusammen mit einem Biegen der Fassung des Brillenmodells zur Anpassung an anatomische Vorgaben des Kopfmodells unter Berücksichtigung geometrischer Kriterien ausgeführt wird,
c) Anpassen des Brillenmodells an das Kopfmodell durch Biegen der Bügel,
wobei die in den Schritten b) und c) durchgeführten Verfeinerungen und Anpassungen einmalig ausgeführt oder zur weiteren Verfeinerung wiederholt werden.

Das erfindungsgemäße Verfahren geht davon aus, dass sowohl vom Kopf des Kunden als auch vom Brillenmodell bereits dreidimensionale Rechenmodelle existieren. Das Verfahren kann im Rahmen der vorliegenden Erfindung auch umfassen, dass ein rechnerisches 3D-Modell des Kopfes des Kunden erstellt wird. Das Kopfmodell wird vorzugsweise aus einem 3D-Scan eines Kopfes oder einer plastischen Replik eines Kopfes erstellt, insbesondere als Polygon-Gitternetz oder als Isofläche, insbesondere aufgrund eines *morphable head model.* Im Rahmen der Erfindung wird unter einem Kopfmodell immer ein rechnerisches 3D-Modell des Kopfes verstanden.

Das Kopfmodell sollte dazu die Geometrie eines Kopfes repräsentieren, festgelegte Längenmaße aufweisen und Schnittberechnungen erlauben. Optional kann das Kopfmodell eine festgelegte Orientierung haben, die sich anderenfalls auch anhand von Schnittberechnungen herstellen ließe. Ebenfalls können optional Referenzpunkte enthalten sein, die andernfalls ebenfalls mithilfe von Schnittberechnungen bestimmt werden können.

Der Kopf oder eine plastische Replik des Kopfes wird zu diesem Zweck von Sensoren erfasst. Als Sensordaten können beispielsweise mehrere Fotos oder Rohdaten eines 3D-Scanners verwendet werden. Es gibt mehrere Methoden, aus allgemeinen Sensordaten zu rechnerischen 3D-Modellen eines Kopfes zu gelangen. Lediglich beispielhaft seien die Konstruktion eines Modells unter Verwendung von Stereofotogrammetrie auf der Grundlage von Fotos, die Anpassung einer Vorlage, insbesondere durch *Morphable Facial Models* (beispielsweise *3DMM ("3D morphable model")* oder *PMM ("probabilistic morphable model")),* auf der Grundlage von Fotos mit Hinzunahme von Merkmalserkennung, oder Position Map Regression genannt. Das Ergebnis ist entweder ein Polygonnetz oder eine Isofläche. In beiden Fällen sind Schnittberechnungen möglich.

Für die erfindungsgemäße virtuelle anatomische Anpassung kann eine bestimmte Orientierung des Kopfes angenommen oder vorausgesetzt werden, welche bei der Erzeugung des Modells beispielsweise durch eine Kinnauflage sichergestellt werden kann, wie sie beispielsweise bei Augenprüfgeräten in Augenarztpraxen oder Optik-Fachgeschäften üblicherweise vorhanden sind. Die Ohren dürfen nicht durch Haar verdeckt sein, so dass in manchen Fällen ein Haarband, eine Haarkappe o. ä. zum Einsatz kommt.

Bei einem solchen Scan wird vorteilhafterweise ein räumlich-hierarchischer Suchindex erstellt, welche es erlaubt, Kreuzungstests *(intersection tests)* des Brillenmodells mit dem Kopfmodell in den nachfolgenden Simulationsschritten wesentlich zu beschleunigen und eine gut handhabbare logarithmische Komplexität der einzelnen Schnitt- und Abstandsberechnungen zu erreichen.

Mit dem erfindungsgemäßen Verfahren wird die anatomische Anpassung des Gestells an den Kopf des Kunden rechnerisch simuliert und seine Eignung für die individuelle Kopfform des Kunden validiert. Dies ermöglicht eine realistische virtuelle Anprobe. Durch die Biegung des Gestells ist es möglich, die zum Halten der Brille auf dem Kopf erforderlichen Kräfte möglichst gleichmäßig auf und über die vorgesehenen Kontaktflächen zu verteilen und somit einen idealen Sitz der Brille zu gewährleisten. Dies führt weiterhin dazu, dass die Visualisierung der Brille auf dem Kopf realitätsgetreu erfolgt und somit eine sehr gute Basis für die Entscheidung gelegt wird, ob die Brille geeignet ist und in die nähere Auswahl kommt. Sofern die Kopfform eines Kunden durch einen 3D-Scan vermessen worden ist, kann eine individuell angepasste Brille mit diesem Verfahren auch ohne physischen Kontakt zum Kunden angefertigt werden.

Das vorliegend vorgestellte erfindungsgemäße Verfahren hat das Ziel der Anpassung des Gestells an den Kopf eines Kunden unter Berücksichtigung verschiedener geometrischer Kriterien, die individuell definiert werden können. Diese Kriterien stellen im Regelfall unter anderem beispielsweise sicher, dass die Brillengläser so zu den Augen orientiert sind, dass ein möglichst freies Sichtfeld sowie ein möglichst gerader Durchblick durch die Gläser gewährleistet ist. Zusätzliche und/oder abweichende geometrische Kriterien können bedarfsgemäß definiert werden. Weitere mögliche geometrische Kriterien betreffen unter anderem die Biegsamkeit der verschiedenen Teile des Gestells, und die Winkel, die zwischen der Fassung und den Bügeln eingenommen werden können.

In dem erfindungsgemäßen Verfahren gilt es, eine Lösung zu finden, die die jeweils definierten geometrischen Kriterien möglichst gut erfüllt. Das erfindungsgemäße Verfahren ist nicht darauf beschränkt, dass ein globales Optimum als Lösung erreicht wird, insbesondere zumindest innerhalb der Fertigungspräzision. Die erfindungsgemäße Anpassung kann auch lokale Optima annähern oder erreichen. Im Falle mehrerer gleichwertiger Lösungen sollte die einfachste Lösung gewählt werden, vorzugsweise diejenige mit dem geringsten Maß der Verbiegung des Brillengestells. Aufgrund der Beschaffenheit des Problems ist üblicherweise allerdings bei geeigneter Definition der geometrischen Kriterien eine einzige globale optimale Lösung vorhanden, wobei andere mögliche Lösungen (lokale Optima) sehr nahe am globalen Optimum liegen. Die entsprechenden Abweichungen liegen allerdings meist unterhalb der Fertigungspräzision.

Die erfindungsgemäße virtuelle anatomische Anpassung kann auf verschiedene Weisen implementiert sein oder werden. Eine erste Möglichkeit ist die numerische Optimierung einer die geometrischen Kriterien repräsentierenden Fehlerfunktion, auch Minimierungsfunktion genannt, welche nichtlinear ausgestaltet sein kann, und in der gegebenenfalls die unterschiedlichen geometrischen Kriterien entsprechend ihrer Bedeutung gewichtet inkorporiert sein können. Bei einer großen Anzahl von zu variierenden Parametern in Bezug auf Position, Raumlage und Biegungen verschiedener Teile des Brillengestells ist diese Methode rechenintensiv, erfordert aber keine oder nur wenige analytische Erkenntnisse in Bezug auf das zu optimierende Problem.

Eine in der Ausführung schnellere und weniger rechenintensive alternative Implementierung profitiert davon, dass die Abhängigkeit der geometrischen Kriterien im Falle der Anpassung einer Brille an einen Kopf weitgehend räumlich lokal ist und das Gesamtproblem daher in mehrere Teilprobleme mit geringerer Dimensionalität aufgespalten werden kann. So ist beispielsweise die Biegung des Ohrenbereichs der Bügel weitgehend unabhängig von der Positionierung der Nasenpads oder der Brücke zwischen den Brillengläsern. Zudem basieren die mathematischen Formulierungen der meisten bis aller Kriterien auf Schnittberechnungen, so dass Annahmen optimaler Werte analytisch als Rückschlüsse aus initial oder iterativ gefundenen Abständen ermittelt werden können. Darauf aufbauend werden optimale Parameter mit entsprechend gezielt formulierten, auf analytischen Betrachtungen basierenden Algorithmen für die Teilprobleme sequentiell bestimmt. Diese Algorithmen können iterativ-suchend sein.

Die in den Verfahrensschritten b) gleichzeitig ausgeführten Teilschritte der Verfeinerung der Positionierung sowie der Biegung der Fassung gehen Hand in Hand, da die für die Positionierung wichtigen geometrischen Kriterien auch Kriterien für die Biegung der Fassung sind und diese beiden Teilschritte somit voneinander abhängig sind. Eine Alternative ist es, die beiden Teilschritte iterativ abwechselnd, aber in jeder Iteration getrennt, zu wiederholen und auf diese Weise eine Konvergenz von Positionierung und Biegung der Fassung zu erreichen.

Die in Verfahrensschritt b) ausgeführte Verfeinerung der Positionierung und Biegung der Fassung einerseits und die in Verfahrensschritt c) ausgeführte Biegung der Bügel andererseits können nacheinander ausgeführt werden. Alternativ ist es jedoch auch möglich, die Verfahrensschritte b) und c) zwei- oder mehrmals nacheinander alternierend ausführen zu lassen, um eine verstärkte Konvergenz der Positionierung und Biegung des gesamten Brillenmodells am Kopfmodell zu erreichen.

Im Schritt b) des erfindungsgemäßen Verfahrens, der Positionierung des Brillenmodells am Kopf, erfolgt in einer Ausführungsform auch eine Biegung der Fassung, also der Brillenfront und gegebenenfalls, sofern vorhanden, eine Anpassung von Nasenpads. Die Positionierungskriterien sind in einem solchen Fall gleichzeitig auch Kriterien für die Biegung der Fassung. In einem zweiten Optimierungslauf im Verfahrensschritt c) werden in einem solchen Fall die Bügel angepasst.

In einer Ausführungsform werden Auflageflächen des Brillenmodells am Kopfmodell vorausgesetzt oder ermittelt und auf die Auflageflächen wirkende Kräfte berechnet, wobei insbesondere die Verteilung der auf die Auflageflächen wirkenden Kräfte am Kopf beim Positionieren und Biegen des Brillenmodells optimiert wird. Die zum Halten der Brille auf dem Kopf erforderlichen Kräfte werden somit gleichmäßig verteilt. Mathematisch bedeutet das Minimierung der Abweichung von einer Soll-Kraft und der Summe von entsprechenden Differenz- bzw. Abweichungsbeträgen an den verschiedenen Auflageflächen. Die entsprechenden Kräfte werden in einem statischen Modell durch eine Überlappungstiefe abgebildet. Die Kräfte und die Überlappungstiefen sind proportional. Der Proportionalitätsfaktor hängt von der Federkonstanten der Brillenfassung ab und aufgrund der Hebelwirkung von der Länge der Bügel.

Es ergibt sich eine multidimensionale Minimierungs- oder Fehlerfunktion, mit der die Verbiegung des Brillengestells und die Verteilung der auf die Auflageflächen wirkenden Kräfte gemeinsam optimiert werden. Die Dimensionalität der Optimierung ist die Anzahl der Eingangsgrößen. Bei der Positionierung der Brille sind dies mindestens sechs Dimensionen, und bei Verbiegung der Bügel beispielsweise jeweils zwei Winkel pro Segment. Der Ausgabevektor der Funktion wird auf einen Skalar reduziert, beispielsweise mittels der Abstandsfunktion der Manhattan- oder Euklidschen Norm, was eine Minimierung der Summe der Absolutbeträge oder deren Quadrate ("least squares") der einzelnen Komponenten zur Folge hat. Eine solche mehrdimensionale Minimierungsfunktion kann mehrere lokale Minima neben einem globalen Minimum aufweisen. Die Optimierungskriterien beschreiben die Zielkonfiguration bei dem vorliegenden Problem allerdings derart eindeutig, dass die Optimierung in den meisten Fällen zum globalen Minimum führt.

In einer Ausführungsform des Verfahrens werden als Referenzpunkte markante Punkte im Gesicht verwendet, insbesondere der oberste Punkt der Nase unterhalb der Stirn und/oder Extrempunkte der Schläfen und/oder Extrempunkte hinter den Ohren. Solche Referenzpunkte erlauben die Initial-Positionierung des Brillenmodells auf dem Kopfmodell. Falls ein Scan durch Anpassung eines Vorlagemodells erzeugt, oder an einem solchen Modell, bspw. zwecks Bereinigung der Sensordaten registriert wurde, können die Datenpositionen der Referenzpunkte entsprechend der Vorlage bestimmt werden. Für beliebige andere Scans kann alternativ beispielsweise der höchste Punkt auf der Nase (Nasenrücken) unterhalb der Stirn durch Schnitt des Kopfmodells mit frontal-orthografischen Strahlen und binärer Suche in einer achsausgerichteten Begrenzungsbox ermittelt werden. Der gesuchte Punkt ist ungefähr zentral in der horizontalen Richtung und als Sattelpunkt durch eine minimale Tiefe entlang der horizontalen Achse und eine maximale Tiefe entlang der vertikalen Achse gekennzeichnet. Referenzpunkte an den Schläfen und hinter den Ohren können auf der Grundlage dieses Startpunktes durch ähnliche Methoden ermittelt werden.

Nachdem der Referenzpunkt oder die Referenzpunkte bekannt sind, wird in einer Ausführungsform des Verfahrens die Initial-Position auf dem Nasenrücken so ausgewählt, dass die Ausrichtung der Brillenfassung orthogonal zu den Strahlen ist, die die Blickrichtung aus den Augenzentren definieren, wenn der Träger nach vorn schaut. Als optischer Pfad wird die Sichtlinie von den Zentren der Augen bzw. Pupillen nach vorne bei normaler Körperhaltung verstanden. Durch die orthogonale Führung des optischen Pfads durch die Brillengläser werden Reflexionen minimiert. Hierfür sind Informationen über die übliche Körperhaltung und die Blickrichtung notwendig, die entweder am Kunden gemessen werden können oder mit Durchschnittswerten angenommen werden können.

In Ausführungsformen wird oder werden beim Positionieren des Brillenmodells am Kopfmodell wenigstens eine oder vorzugsweise mehrere der folgenden nicht abschließend aufgeführten geometrischen Kriterien berücksichtigt:
- dass die optischen Pfade einen vorbestimmten Mindestabstand zur Fassung einhalten,
- dass die optischen Pfade möglichst orthogonal durch die Brillengläser verlaufen,
- dass die Fassung die Wangen nicht berührt,
- dass die Brillengläser einen vorbestimmten Mindestabstand zur Haut einhalten,
- dass die Bügel einen vorbestimmten Mindestabstand zu den Schläfen einhalten,
- dass die von der Brille ausgeübten Kräfte an Kontaktflächen auf der Nase und am Kopf hinter den Ohren an verschiedenen, auf der jeweiligen Kontaktfläche befindlichen Messpunkten angeglichen werden.

In dieser nicht abschließenden Auflistung von Randbedingungen wird sichergestellt, dass die optischen Pfade möglichst anatomisch korrekt und reflektionsarm durch die Brillengläser verlaufen und die Positionierung und Biegung des Brillengestells nicht dazu führen, dass die optischen Pfade zu nahe an die Fassung herankommen und die Brillenfassung somit das Blickfeld stört. So kann bei Unterschreiten eines Mindestabstands eines optischen Pfads zur Fassung der Abstand bis zum Erreichen des Mindestabstands vergrößert werden. Das Gleiche gilt für den Abstand zwischen Fassung und Wangen, da die Fassung die Wangen nicht berühren sollte, sowie für den Abstand der Brillengläser zur Haut, da die Brillengläser nicht zu nahe an der Haut, also an der Oberfläche des Kopfmodells angeordnet sein sollten. Eine solche unerwünschte Anordnung würde dazu führen, dass die Brille beim Tragen Perspiration oder Transpiration behindern würde. Dies würde das Tragegefühl deutlich verschlechtern und zu einer Verschmutzung der Brillengläser führen. Auch der Abstand der Bügel zu den Schläfen wäre bei der Optimierung mindestens auf den Mindestabstand zu vergrößern. Ferner sollten die von der Brille auf den Kopf ausgeübte Kraft möglichst gleichmäßig auf und über die vorgesehenen Kontaktflächen auf der Nase und am Kopf hinter den Ohren vorzugsweise verteilt werden. Hierdurch wird der Druck, der auf die Kontaktflächen ausgeübt wird, minimiert und ein komfortables Tragegefühl erreicht.

Zur Anpassung wird das Gestell bzw. das Brillenmodell virtuell gebogen. Wie ein bestimmtes Gestell gebogen werden kann, hängt von seinem Material und dessen Geometrie ab. In einer Ausführungsform des Verfahrens werden beim Biegen des Brillenmodels Materialeigenschaften und geometrische Abmessungen der Fassung und der Bügel berücksichtigt. So können der Schläfenabstand und der Winkel der Bügel in Bezug auf die Fassung beispielsweise derart berücksichtigt werden, dass die Bügel als Startwert einen Winkel von 5° nach außen im Sinne von "weg von der Mitte" haben, um eine gute Anpassung der Bügel zu erreichen. Anders ausgedrückt ist der Winkel zwischen dem Bügel und der Fassung als Startwert beispielsweise ein stumpfer Winkel von 95°.

Abweichungen der Winkel der Bügel von einem Wert von 5° sind in geringem Maße akzeptabel, was beispielsweise durch einen Term, der bei 5° ein Minimum aufweist, dargestellt werden kann. Hierbei kann es sich um eines der erfindungsgemäß verwendeten geometrischen Kriterien handeln.

Ein weiteres geometrisches Kriterium ist dadurch gegeben, dass ein orthogonaler Schnitt der optischen Pfade durch die Linsen vor allem durch die Kippung, also die Rotation um Breitenachse, zu erreichen ist. Alle diese Bedingungen schränken die Verbiegung der Mitte der Brille ein.

Startposition des ersten Optimierungsschrittes kann die Ausrichtung der Brillenfassung orthogonal zu den Strahlen sein, die die Blickrichtung beispielsweise aus den Augenzentren definieren, wenn der Träger nach vorn schaut. Bei der weiteren Optimierung sollte diese Orthogonalität der optischen Pfade in Bezug auf die Brillengläser berechnet und optimiert werden, sofern verfügbar, oder zu einer durch die Fassung für das jeweilige Brillenglas aufgespannten Tangentialebene.

Weiter sollte die Breite der Brille idealerweise dem Schläfenabstand entsprechen. Auch diese Differenz kann als geometrisches Kriterium in einem Term oder einer Funktion ausgedrückt werden, der oder die bei Null ein Minimum aufweist. So geht eine mögliche Optimierung dahin, dass die Brillenfassung in ihrer Breite ungefähr gleich zur Schläfendistanz gemacht wird, und/oder einen optischen Pfad zu erreichen, der orthogonal zu den Brillengläsern ist.

Falls die Fassung keine Nasenpads aufweist, sollte die Kontaktfläche auf der Nase maximiert werden. Die Biegung der Bügel sollte erfolgen, um die Kontaktfläche über und hinter den Ohren zu maximieren. Diese Überlegungen können sowohl zur Formulierung eines Startpunktes der Optimierung dienen als auch als geometrische Kriterien. Dabei ist das Verhalten des Optimierungsverfahrens durch die Fehlerfunktion charakterisiert, in welcher die Variablen die tatsächlich gesuchten Werte bezeichnen. Ziel ist es üblicherweise, den Wert der Fehlerfunktion zu minimieren. Verschiedene geometrische und physikalische Parameter können in eine solche Filterfunktion mit verschiedenen Gewichtungen einfließen und somit in unterschiedlichem, individuellen Maß Einfluss auf das Verhalten der Optimierung nehmen.

Das Biegen der Fassung umfasst im Rahmen der Erfindung in erster Linie ein Biegen eines Nasenbügels oder eines zentralen Teils der Fassung zwischen den Brillengläsern. Auch die Übergänge der Fassung zu den Bügeln, mit oder ohne Gelenk, können im Rahmen des Verfahrens gebogen werden. Dabei können die zu ermittelnde Biegung der Fassung zwischen den Brillengläsern und den Seiten sowie die zu ermittelnde Rotation der Fassung um die horizontale Achse ausgehend von einer Initial-Positionierung des Brillengestells ermittelt werden, welche beispielsweise auf dem Referenzpunkt am oberen Ende der Nase basiert, wobei die Ausrichtung der Fassung orthogonal zu den Strahlen ist, die die Blickrichtung aus den Augenzentren definieren, wenn der Träger nach vorn schaut. Dazu wird in einer Ausführungsform eine Fehlerfunktion gebildet, die ein oder mehrere der zuvor genannten Optimierungsziele und Randbedingungen sowie gegebenenfalls gewichtete Strafterme für die Biegewinkel beinhaltet. Die Strafterme haben den Zweck, eine minimal gebogene Konfiguration des Brillengestells zu finden, welche die zugrundeliegenden Randbedingungen und Ziele erfüllt, da Materialien nicht unendlich gebogen werden können. Die Gewichtungen für spezifische Materialien können beispielsweise empirisch ermittelt werden.

Gleichzeitig oder in einem zweiten Optimierungslauf können die Bügel angepasst werden. Das Gestell, und in dem Fall besonders die Bügel, dürfen die Schläfen des Kopfes nicht berühren, weil anderenfalls die Brille rutschen würde. Die eigentlichen Kontaktflächen sind am Kopf hinter den Ohren und an den Ohren selbst. Die Optimierung erfolgt im üblichen Fall iterativ, wobei die Biegung und Positionierung der Fassung entweder abgeschlossen wird, bevor die Biegung und Positionierung der Bügel, welche an der Fassung befestigt sind, durchgeführt werden, oder in jeder Iteration werden die entsprechenden Optimierungsberechnungen für Fassung und Bügel getrennt voneinander und nacheinander oder aber gemeinsam durchgeführt. In weiteren Ausführungsformen erfolgt die Anpassung der Positionierung und der Biegung des Brillenmodells somit in getrennten Optimierungsläufen oder in einem gemeinsamen Optimierungslauf.

Das Biegen des Brillenmodells erfolgt in einer Ausführungsform des Verfahrens durch eine räumliche Verformung erfolgt, insbesondere eine Freiform-Deformation, eine anwendungsspezifische Implementierung der Verformung, oder eine für das jeweilige Modell festgelegte Parametrik. Wenn die Biegung mittels einer Maschine an einer physischen Brille durchgeführt wird, können mittels einer angepassten bzw. für das Modell festgelegten Parametrik fertigungsbedingte mechanische Einschränkungen modelliert werden. Dabei kann die Verbiegung insbesondere über lokale Winkel parametrisiert sein, einschließlich Torsionswinkel um eine Biegeachse.

Eine Freiform-Deformation ist ein rein geometrisches Verfahren, welches in der Computergrafik angewendet wird, um die Form eines Objekts in einer 2D-oder 3D-Grafik zu verändern, wobei das Objekt indirekt über eine kontinuierlich ändernde Biegung, Stauchung und Drehung des Raums mittels Verschiebung von Kontrollpunkten verformt wird. Dazu wird der zwei- oder dreidimensionale Raum als Topologie aus verbundenen rechteckigen bzw. quaderförmigen Grenzen aufgefasst. Entsprechen die Kontrollpunkte den Eckpunkten der Grenzen, so liegt eine Identitätsabbildung vor, es findet dann keine Verformung statt. Bei Änderung der Kontrollpunkte interpoliert die Abbildung den zwei- bzw. dreidimensionalen Raum innerhalb der Grenzen auf eine, der Topologie entsprechende Form gemäß den Kontrollpunkten. Die Abbildungsfunktion ist bei Verwendung mindestens kubischer Polynome bis einschließlich der ersten Ableitung stetig, und damit ist die Interpolation selbst über die Raumabschnitte hinweg weich und geometrisch nahtlos.

Die Freiform-Deformation erfolgt in einer Weiterbildung des Verfahrens auf der Grundlage eines Modells mit Kontrollpunkten, wobei eine Auflösung der Kontrollpunkte entlang einer Achse materialabhängig ist. In einer Ausführungsform sind die Kontrollpunkte in rechteckigen 4x4-Konfiguration angeordnet, die senkrecht zu der Achse stehen, wobei zwei Rotationswinkel zwischen benachbarten rechteckigen Konfigurationen eine lokale Biegung beschreiben. Die Anordnung und Beabstandung der Kontrollpunkte oder Deformationspunkte kann die Steifigkeit der verschiedenen Abschnitte des Brillengestells in verschiedenen Richtungen abbilden. Bei zwei Winkein ist dieses Vorgehen äquivalent über Biegung an einem 3D-Spline realisierbar, wobei die Kontrollpunkte dann entlang einer "verbogenen Achse" liegen.

Bei einem Brillenmodell, welches Nasenpads aufweist, wird in einer Ausführungsform bei der Auswahl der Initial-Positionierung und/oder bei einem oder mehreren späteren Optimierungsschritten eine Orientierung der Nasenpads ermittelt, die die Auflagefläche der Nasenpads auf der Nase maximiert.

Die der Erfindung zugrundeliegende Aufgabe wird auch durch ein System zur virtuellen anatomischen Anpassung einer Brille an den Kopf eines Menschen gelöst, welches eine Datenverarbeitungsanlage mit einer Datenspeichereinrichtung umfasst, in welcher Daten eines Kopfmodells und eines Brillenmodells gespeichert sind, wobei die Datenspeichereinrichtung ausgebildet und mit einem ausführbaren Programmcode eingerichtet ist, ein zuvor beschriebenes erfindungsgemäßes Verfahren auszuführen. Ein solches System verwirklicht die gleichen Merkmale, Vorteile und Eigenschaften wie das erfindungsgemäße Verfahren. Die Datenverarbeitungsanlage oder das System kann eine Anzeigevorrichtung und eine Eingabevorrichtung umfassen, die zur Interaktion mit einem Kunden oder einer anderen Bedienperson, beispielsweise einem Optiker oder Personal in einem Optik-Fachgeschäft, geeignet ist und dient. Die Anzeigevorrichtung dient auch dazu, die Visualisierung der Brille auf dem Kopf des Kunden darzustellen.

Das System umfasst in einer Ausdrucksform zusätzlich eine Vorrichtung zur Erstellung des 3D-Kopfmodells eines Menschen, die Teil der Datenverarbeitungsanlage oder mit der Datenverarbeitungsanlage verbunden oder verbindbar ist, um Daten eines erstellten 3D-Kopfmodells an die Datenverarbeitungsanlage zu übermitteln. Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Ausführungsform eines Systems zur virtuellen anatomischen Anpassung einer Brille an den Kopf eines Menschen,
- Fig. 2: eine schematische Darstellung eines 3D-Brillenmodells,
- Fig. 3: eine schematische Darstellung einer Freiform-Deformation eines Abschnitts eines Bügels und
- Fig. 4: eine schematische Darstellung der Ermittlung der Auflagefläche und Auflagekräfte eines Bügels am Kopf.

In den Zeichnungen sind jeweils gleiche oder gleichartige Elemente und/oder Teile mit denselben Bezugsziffern versehen, so dass von einer erneuten Vorstellung jeweils abgesehen wird.

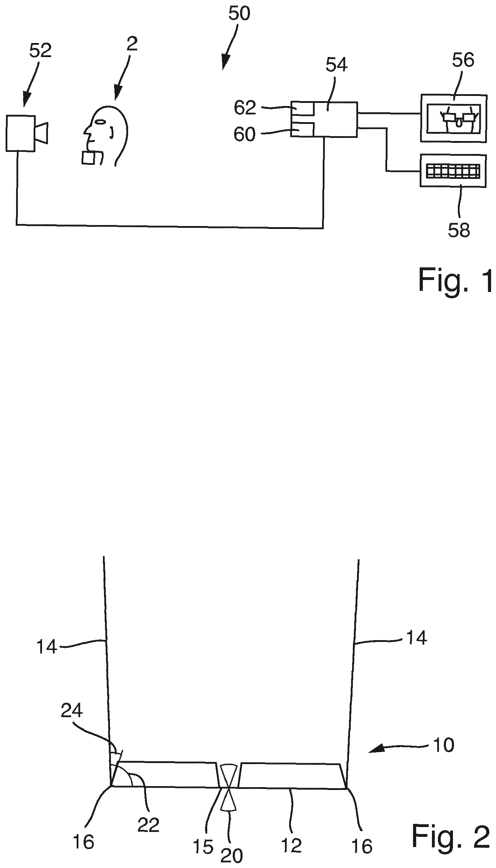

Fig. 1 zeigt eine schematische Darstellung einer Ausführungsform eines Systems 50 zur virtuellen anatomischen Anpassung einer Brille an den Kopf 2 eines Menschen. Das System 50 umfasst zentral eine Datenverarbeitungsanlage 54, welche eine Datenspeichereinrichtung 60 und einen Prozessor 62 umfasst, welche unter Einsatz entsprechender Software die Datenverarbeitungsanlage 54 in die Lage versetzen, das oben beschriebene erfindungsgemäße Verfahren auszuführen. Mit der Datenverarbeitungsanlage 54 verbunden sind eine Anzeigevorrichtung 56 sowie eine Eingabevorrichtung 58, die eine Interaktion mit einem Benutzer ermöglichen. Die Anzeigevorrichtung 56 dient beispielsweise dazu, eine Darstellung einer erfindungsgemäß virtuell angepassten Brille durch Überlagerung eines virtuell angepassten Brillenmodells 10 auf ein Kopfmodell 30 anzuzeigen. Ferner wird die Anzeigevorrichtung 56 angesteuert, um Auswahlmöglichkeiten wie beispielsweise die Darstellungsformen, Richtung sowie die Auswahl von Brillen anzuzeigen. Als Eingabevorrichtung 58 können eine Tastatur, eine Maus oder entsprechende bekannte Eingabevorrichtungen dienen.

In dem System 50 ist die Datenverarbeitungsanlage 54 im in Figur 1 gezeigten Fall zusätzlich noch mit einem 3D-Scanner 52 verbunden, welche dazu eingerichtet ist, ein dreidimensionales Modell 30 eines Kopfes 2 eines Kunden anzufertigen. Dies kann durch die Aufnahme und Verarbeitung einer Abfolge von zweidimensionalen Bildern unter Drehung des Kopfes 2 relativ zu dem 3D-Scanner 52 oder umgekehrt geschehen, oder durch Aufnahme von Bildern mit zusätzlicher Tiefeninformation. Hierzu umfasst der 3D-Scanner 52 einen oder mehrere Sensoren gleichen oder unterschiedlichen Typs, beispielsweise mehrere Kameras. Die entsprechenden Daten werden über eine Verbindung an die Datenverarbeitungsanlage 54 übermittelt. Dabei kann es sich bereits um das vollständige Kopfmodell 30 handeln. Alternativ können die vom 3D-Scanner 52 aufgenommenen Rohdaten an die Datenverarbeitungsanlage 54 übermittelt werden und das Kopfmodell 30 in der Datenverarbeitungsanlage 54 aus den Rohdaten erstellt werden.

Die Datenverarbeitungsanlage 54, die Anzeigevorrichtung 56, die Eingabevorrichtung 58 und gegebenenfalls der 3D-Scanner 52 des Systems 50 können lokal konzentriert angeordnet sein und ein abgeschlossenes System darstellen, oder räumlich verteilt und über ein Netzwerk, beispielsweise das Internet, miteinander verbunden sein, so dass eine zentrale Datenverarbeitungsanlage 54 Anzeigevorrichtungen und Eingabevorrichtungen in einer Vielzahl von verschiedenen Lokalitäten, beispielsweise Optik-Fachgeschäften, versorgt.

In Figur 2 Ist ein 3D-Brillenmodell 10 schematisch dargestellt, und zwar in einer Draufsicht, die senkrecht auf der von der Fassung 12 und den Bügeln 14 des Brillenmodells 10 aufgespannten Fläche steht. Die Bügel 14 sind mit der Fassung 12 über Gelenke 16 verbunden, die lediglich schematisch angedeutet sind. Es kommen aber auch Gestelle infrage, bei denen die Fassung 12 direkt in die Bügel 14 übergeht.

Die Figur 2 deutet mehrere Biegefreiheitsgrade des Brillenmodells 10 an. So ist die Fassung 12 zwischen den Brillengläsern am Ort des Nasenbügel 15 biegbar, angedeutet durch die Biegungswinkel 20. Für beide Gelenke 16 gilt, dass das Gelenk am Übergang zwischen Fassung 12 und Bügel 14 um zwei Biegungswinkel 22, 24 gebogen werden kann. Dabei bezeichnet der Biegungswinkel 22 einen Biegungswinkel in der Ebene, die von der Fassung 12 und dem Bügel 14 aufgespannt wird, während der Biegungswinkel 24 in einer dazu senkrechten Ebene aufgespannt ist und die Neigung der Fassung bei Rotation um eine horizontale Achse beschreibt, die durch beide Gelenke 16 verläuft. Der mit dem Bezugszeichen 22 bezeichnete Biegungswinkel hat idealerweise einen Wert von ca. 95°. Empirisch ist dann die Fassung 12 in etwa so breit wie der Schläfenabstand des Kopfes 2.

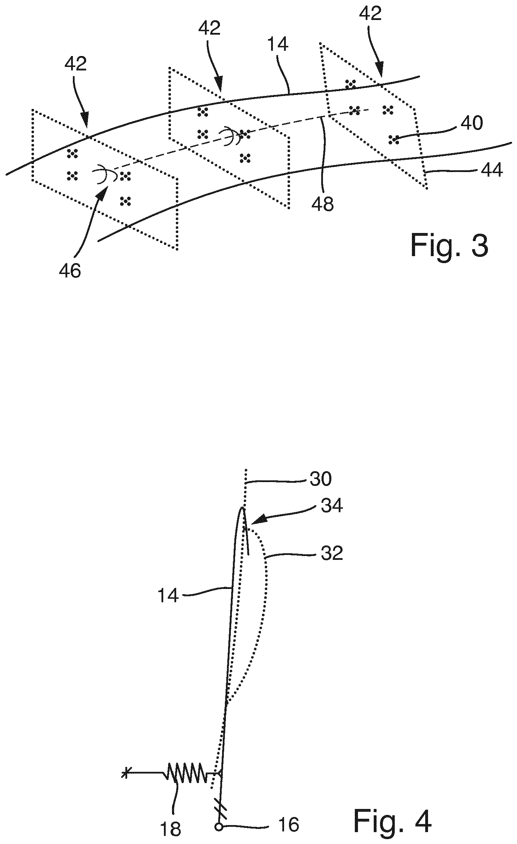

Fig. 3 zeigt eine schematische Darstellung einer Freiform-Deformation eines Abschnitts eines Bügels 14 (durchgezogene Linien) eines Brillenmodells 10. Hierzu sind Kontrollpunkte 40, auch Deformationspunkte genannt, um den Bügel 14 herum definiert, die jeweils zu viert in einer rechteckigen Konfiguration 42 angeordnet sind, einer sogenannten 4x4-Konfiguration, welche ihrerseits jeweils eine Ebene 44 aufspannen. Die Abstände dieser Konfigurationen 42 entlang dem Bügel 14 sind festgelegt und unveränderlich. Eine Verbiegung des Bügels 14 wird simuliert, in dem jede Konfiguration 42 bzw. Konfigurationsebene 44 um zwei zueinander orthogonale Rotationswinkel 46 rotiert wird. Eine zentrale Achse 48 des Bügels 14, gestrichelt dargestellt, verläuft durch die Zentren der jeweiligen Konfigurationen 42 und folgt dabei den Rotationswinkeln 46, so dass sich die entsprechende Biegung ergibt. Die Steifigkeit des Bügels 14, welche sich aus dem Material und der Geometrie des Bügels 14 ergibt, lässt sich beispielsweise durch eine entsprechende Begrenzung der Rotationswinkel 46 sowie entsprechend gewichtete Strafterme für die jeweilige Rotation in den verschiedenen Richtungen darstellen. Auf diese Weise kann es simuliert werden, dass ein im Querschnitt flacher Bügel 14 in einer ersten Richtung deutlich einfacher biegbar ist als in der zur ersten Richtung senkrechten zweiten Richtung.

In Fig. 4 wird schematisch beispielhaft dargestellt, wie Auflageflächen 34 und Auflagekräfte eines Bügels 14 am Kopfmodell ermittelt werden.

Die auf den Kopf aufgesetzte Brille verhält sich wie eine Feder. Die Zugspannung und der Druck hängen von Material und Richtung ab. Es kann daher ein Modell verwendet werden, bei dem der Rahmen bis zu einer bestimmten Tiefe mit dem Kopf überlappt. Auch der Haut kann eine gewisse Elastizität zugewiesen werden. Die Normalen der Flächen müssen in einer nicht-überlappenden Ansicht parallel zueinander ausgerichtet werden, um die Kontaktfläche zu maximieren. An diesen Punkten ist die Haut sehr dünn, so dass es ausreichen kann, deren Elastizität nur als kleine zusätzliche Überlappung hinzuzuziehen. An den Seiten kann auch die Hebelwirkung der Bügel 14 mit einbezogen werden, indem verlangt wird, dass die Überlappung proportional zu dem Effekt entlang der in Figur 3 dargestellten Tiefenachse 48 ist.

Konkret dargestellt ist eine Seite des Kopfmodells 30 mit einem Ohr 32, sowie ein Brillenbügel 14 des Modells 10, welches im Bereich des Ohres 32 am Kopfmodell 30 anliegt. Der Brillenbügel 14 ist am Gelenk 16 befestigt. Die eingenommene Position führt dazu, dass das Modell des Bügels 14 im Bereich einer Auflagefläche 34 am Kopfmodell 30 anliegt. Hieraus ergibt sich eine geometrische Auflagefläche 34. Ferner wird ein statischer Druck, als Federkraft 18 symbolisiert, simuliert, der unter anderem durch Materialeigenschaften und geometrische Eigenschaften des gebogenen Bügels 14, das Gelenk 16 sowie der Fassung und gegebenenfalls Materialeigenschaften der Haut am Ort der Auflagefläche 34 bestimmt ist.

In einer Ausführungsform wird die Überlappungstiefe des Bügels 14 mit dem Kopfmodell 30 am Ort der Auflagefläche 34 betrachtet und durch geeignete Fehlerterme das Erreichen eines gewünschten Andrucks und dessen gleichmäßige Verteilung über eine bestimmte Oberfläche modelliert. Nach der Optimierung lässt sich die Funktion unter den optimierten Parametern teilweise auswerten und die tatsächliche Überlappung bestimmen, über welche, unter Hinzunahme der bekannten Feder- und Hebelwirkung der Brillenfassung, dann die Kräfte gegeben sind.

Je weiter beispielsweise der Bügel 14 nach außen gebogen wird, desto größer wird aufgrund der Federwirkung die vom Brillenbügel 14 auf den Kopf ausgeübte Kraft sein. Diese Kraft verteilt sich allerdings über die Auflagefläche 34, so dass der Druck des Bügels 14 auf den Kopf sowohl von der Biegung nach außen als auch von der Größe der durch die Biegung des Bügels 14 erreichten Auflagefläche 34 abhängt. Ziel ist es, die zum Halten der Brille erforderlichen Kräfte möglichst gleichmäßig auf und über die verschiedenen vorgesehenen Auflageflächen zu verteilen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Kopf
- 10: Brillenmodell
- 12: Fassung
- 14: Bügel
- 15: Nasenbügel
- 16: Gelenk
- 18: Klemmkraft
- 20, 22, 24: Biegungswinkel
- 30: Kopfmodell
- 32: Ohr
- 34: Auflagefläche
- 40: Kontrollpunkt
- 42: flächige 4x4-Konfiguration von Kontrollpunkten
- 44: Ebene der 4x4-Konfiguration
- 46: Rotationswinkel der 4x4-Konfiguration
- 48: zentrale Achse
- 50: System
- 52: 3D-Scanner
- 54: Datenverarbeitungsanlage
- 56: Anzeigevorrichtung
- 58: Eingabevorrichtung
- 60: Datenspeichereinrichtung
- 62: Prozessor

## Patentansprüche

1. Verfahren zur virtuellen anatomischen Anpassung einer Brille an den Kopf (2) eines Menschen, mit den Verfahrensschritten
a) Auswählen einer Initial-Positionierung eines dreidimensionalen Brillenmodells (10) der Brille an einem dreidimensionalen Kopfmodell (30) anhand bekannter Referenzpunkte des Kopfmodells (30),
b) Verfeinern der Positionierung des Brillenmodells (10) am Kopfmodell (30), ausgehend von der Initial-Positionierung, wobei das Verfeinern der Positionierung zusammen mit einem Biegen der Fassung des Brillenmodells (10) zur Anpassung an anatomische Vorgaben des Kopfmodells (30) ausgeführt wird,
c) Anpassen des Brillenmodells (10) an das Kopfmodell (30) durch Biegen der Bügel (14),
wobei die in den Schritten b) und c) durchgeführten Verfeinerungen und Anpassungen einmalig ausgeführt oder zur weiteren Verfeinerung wiederholt werden.

2. Verfahren nach Anspruch 1, **dadurch gekennzeichnet, dass** für das Kopfmodell (30) ein räumlich-hierarchischer Suchindex erstellt wird.

3. Verfahren nach Anspruch 1 oder 2, **dadurch gekennzeichnet, dass** Auflageflächen (34) des Brillenmodells (10) am Kopfmodell (30) vorausgesetzt oder ermittelt werden und auf die Auflageflächen (34) wirkende Kräfte berechnet werden, wobei insbesondere die Verteilung der auf die Auflageflächen (34) wirkenden Kräfte am Kopf beim Positionieren und Biegen des Brillenmodells (10) optimiert wird.

4. Verfahren nach einem der Ansprüche 1 bis 3, **dadurch gekennzeichnet, dass** als Referenzpunkte markante Punkte im Gesicht verwendet werden, insbesondere der oberste Punkt der Nase unterhalb der Stirn und/oder Extrempunkte der Schläfen und/oder Extrempunkte hinter den Ohren (32).

5. Verfahren nach einem der Ansprüche 1 bis 4, **dadurch gekennzeichnet, dass** die Initial-Position auf dem Nasenrücken so ausgewählt wird, dass die Ausrichtung der Fassung orthogonal zu den Strahlen ist, die die Blickrichtung aus den Augenzentren definieren, wenn der Träger nach vorn schaut.

6. Verfahren nach einem der Ansprüche 1 bis 5, **dadurch gekennzeichnet, dass** beim Positionieren des Brillenmodells (10) am Kopfmodell (30) wenigstens eine oder mehrere der folgenden geometrischen Kriterien berücksichtigt wird oder werden:
- dass die optischen Pfade einen vorbestimmten Mindestabstand zur Fassung einhalten,
- dass die optischen Pfade möglichst orthogonal durch die Brillengläser verlaufen,
- dass die Fassung (12) die Wangen nicht berührt,
- dass die Brillengläser einen vorbestimmten Mindestabstand zur Haut einhalten,
- dass die Bügel einen vorbestimmten Mindestabstand zu den Schläfen einhalten,
- dass die von der Brille ausgeübten Kräfte an Kontaktflächen (34) auf der Nase und am Kopf hinter den Ohren (32) an verschiedenen, auf der jeweiligen Kontaktfläche befindlichen Messpunkten angeglichen werden.

7. Verfahren nach einem der Ansprüche 1 bis 6, **dadurch gekennzeichnet, dass** beim Biegen des Brillenmodels (10) Materialeigenschaften und geometrische Abmessungen der Fassung (12) und der Bügel (14) berücksichtigt werden.

8. Verfahren nach einem der Ansprüche 1 bis 7, **dadurch gekennzeichnet, dass** das Biegen der Fassung (12) ein Biegen eines Nasenbügels (15) der Fassung (12) umfasst.

9. Verfahren nach einem der Ansprüche 1 bis 8, **dadurch gekennzeichnet, dass** die Anpassung der Positionierung und der Biegung des Brillenmodells (10) in getrennten Optimierungsläufen oder in einem gemeinsamen Optimierungslauf erfolgt.

10. Verfahren nach einem der Ansprüche 1 bis 9, **dadurch gekennzeichnet, dass** das Biegen des Brillenmodells (10) durch eine räumliche Verformung, insbesondere eine Freiform-Deformation, oder mittels einer für das jeweilige Modell festgelegten Parametrik erfolgt.

11. Verfahren nach Anspruch 10, **dadurch gekennzeichnet, dass** die Freiform-Deformation auf der Grundlage eines Modells mit Kontrollpunkten (40) erfolgt, wobei eine Auflösung von Kontrollpunkten (40) entlang einer Achse materialabhängig ist, wobei insbesondere die Kontrollpunkte in rechteckigen 4x4-Konfigurationen (42) angeordnet sind, die senkrecht zu der Achse stehen, und zwei Rotationswinkel (46) zwischen benachbarten rechteckigen Konfigurationen (42) eine lokale Biegung beschreiben.

12. Verfahren nach einem der Ansprüche 1 bis 11, **dadurch gekennzeichnet, dass** bei einem Brillenmodell (10), welches Nasenpads aufweist, bei der Auswahl der Initial-Positionierung und/oder bei einem oder mehreren späteren Optimierungsschritten eine Orientierung der Nasenpads ermittelt wird, die die Auflagefläche (34) der Nasenpads auf der Nase maximiert.

13. System (50) zur virtuellen anatomischen Anpassung einer Brille an den Kopf (2) eines Menschen, umfassend eine Datenverarbeitungsanlage (54) mit einer Datenspeichereinrichtung (60), in welcher Daten eines Kopfmodells (30) und eines Brillenmodells (10) gespeichert sind, wobei die Datenspeichereinrichtung (60) ausgebildet und mit einem ausführbaren Programmcode eingerichtet ist, ein Verfahren nach einem der Ansprüche 1 bis 12 auszuführen.

14. System (50) nach Anspruch 13, **dadurch gekennzeichnet, dass** das System (50) zusätzlich eine Vorrichtung (52) zur Erstellung des 3D-Kopfmodells (30) eines Menschen umfasst, die Teil der Datenverarbeitungsanlage (54) oder mit der Datenverarbeitungsanlage (54) verbunden oder verbindbar ist, um Daten eines erstellten 3D-Kopfmodells (30) an die Datenverarbeitungsanlage (54) zu übermitteln.
